# EUROPÄISCHE PATENTSCHRIFT

(11) **EP 1 181 485 B1**
(45) Veröffentlichungstag und Bekanntmachung des Hinweises auf die Patenterteilung: **19.11.2003**
(21) Anmeldenummer: 00936798.8
(22) Anmeldetag: 25.05.2000
(51) Int. Cl.: F23D 14/46, F23D 14/38

(54) **BRENNERKOPF EINES LICHTBOGENSCHWEISS- ODER -SCHNEIDBRENNERS MIT FORMSCHLÜSSIG GEHALTENER KONTAKTDÜSE**
BURNER HEAD OF AN ELECTRIC ARC WELDING OR CUTTING BURNER WITH CONTACT NOZZLE SUPPORTED IN POSITIVE FIT
LANCE DE CHALUMEAU POUR CHALUMEAU COUPEUR OU POUR SOUDAGE A L'ARC A BUSE DE CONTACT MAINTENUE PAR LIAISON DE FORME

(30) Priorität: 31.05.1999 DE 19924728; 22.07.1999 DE 19934369
(43) Veröffentlichungstag der Anmeldung: 27.02.2002
(73) Patentinhaber: Alexander Binzel Schweisstechnik GmbH & Co. KG, 35418 Buseck (DE)
(72) Erfinder: JUNG, Michael, D-35510 Butzbach (DE); METZGER, Hubert, D-35423 Lich (DE)
(74) Vertreter: Müller, Eckhard, Dr.
(86) Internationale Anmeldenummer: EP0004762
(87) Internationale Veröffentlichungsnummer: WO00073700

(56) Entgegenhaltungen:
- DE-A- 1 404 587
- DE-C- 866 276
- DE-C- 944 541
- US-A- 1 600 732
- US-A- 2 263 655
- US-A- 3 375 090

## Beschreibung

Die Erfindung betrifft einen Brennerkopf eines Lichtbogenschweiß- oder -schneidbrenners nach dem Oberbegriff des Anspruchs 1.

Ein solcher Brennerkopf ist aus Dokument DE-A-1 404 587 schon bekannt.

Bei Kontaktdüsen, welche auch als Stromkontaktdüsen bezeichnet werden, handelt es sich um ein an der Spitze eines Lichtbogenschweiß- oder -schneidbrenners mit beispielsweise abschmelzender Elektrode angebrachtes austauschbares Metallteil. Die Kontaktdüse hat zum einen die Funktion der Führung der Drahtelektrode und zum anderen wird mittels der Kontaktdüse der Schweißstrom auf die Drahtelektrode übertragen und zusätzlich Wärme abgeführt. Die Fixierung der Kontaktdüse am Brennerhals erfolgt kraftschlüssig, entweder über eine Klemmverbindung oder ein Gewinde. Die Klemmverbindung von Kontaktdüse und Spannzange stellt große Übergangsflächen zur Verfügung. Die Klemmverbindung kann aber nicht in jedem Fall eine betriebssichere Verbindung gewährleisten, insbesondere bei Drahtvorschubgeschwindigkeiten von mehr als 40 m/s kann es bei Festbrennern oder allein schon aufgrund der Reibung des Drahtes an der Kontaktdüse zu einem Herausstoßen der Kontaktdüse kommen. Der Einsatz eines Gewindes stellt zwar eine sichere Verbindung dar, die erzielbaren Übergangsflächen für Strom und Wärme sind jedoch bei vertretbarer Gewindelänge und Baugröße oft zu klein.

Aus der CH-PS 472 632 ist bereits ein Brennerhandgriff bekannt, der eine Sauerstoffzuleitung und eine Brenngaszuleitung besitzt. Ferner ist ein Schweißeinsatz mit einer Mischkammer vorgesehen. Handgriff und Schweißeinsatz sind miteinander durch einen Anschlußnippel verschraubt, indem der Injektor und ein Aufsatzstück eingesetzt ist. Letzteres ist beweglich und weist beiderends einen dichtenden Kugelsitz auf.

Aus der DE 41 37 297 A1 ist eine Gasbrennerdüse zur Erzeugung einer Mikroflamme zum Einsatz in der Feinwerk- und Mikrotechnik bekannt. Der Düseneinsatz wird in der Gasbrennerdüse dadurch gehalten, daß nach Einsetzen des Düseneinsatzes in ein Gasröhrchen dieses mittels einer Schleifscheibe abgeschliffen wird. Der beim Schleifen erzeugte Bördelrand legt sich über den Rand des Einsatzes und sorgt somit für eine Halterung des Einsatzes in dem Gasröhrchen.

Aus der DD 294 330 A5 ist ein Schneidkopf mit Sauerstoffzuführung bekannt, wobei die Schneiddüse aus zwei Teilen besteht. Ein zentrales, axiales Teil weist zwei zylindrische Lager auf, die über Preßpassung mit dem äußeren Teil der Schneiddüse in Eingriff stehen.

Demgegenüber liegt der vorliegenden Erfindung die Aufgabe zugrunde, eine Kontaktdüse mit den eingangs genannten Merkmalen dahingehend weiterzubilden, daß eine sichere Halterung der Kontaktdüse am Brennerkopf gewährleistet und zum anderen eine große Übergangsfläche zwischen Kontaktdüse und Brennerkopf vorhanden ist.

Diese Aufgabe wird nach der Erfindung bei dem Brennerkopf mit dem eingangs genannten Merkmalen im wesentlichen dadurch gelöst, daß die Kontaktdüse und die Spannzange jeweils miteinander korrespondierende Mittel aufweisen, die bei am Brennerkopf gehalterter Kontaktdüse einen Formschluß zwischen Kontaktdüse und Spannzange bilden.

Hierdurch ist gewährleistet, daß die Kontaktdüse aufgrund der formschlüssig miteinander korrespondierenden Mittel sicher am Brennerkopf gehaltert ist. Dadurch, daß zur lösbaren Halterung weiterhin eine Spannzange eingesetzt wird, stehen große Übergangsflächen zur Ableitung der Wärme beziehungsweise der Übertragung des Schweißstroms zur Verfügung. Durch die Erfindung werden die Vorteile einer Klemmverbindung mit der einer Gewindeverbindung vereinigt.

Nach einer ersten vorteilhaften Ausgestaltung der Erfindung sind die korrespondierenden Mittel als Nut-/Federmittel ausgebildet.

Es besteht jedoch auch die Möglichkeit, die Mittel als Ringnut/-bund auszubilden.

Nach einer vorteilhaften Weiterbildung der Erfindung weist die Kontaktdüse einen rückwärtigen, im wesentlichen zylindrischen Schaft auf, der über seinen Umfang einen oder mehrere ringförmig verteilte Einstiche oder eine umlaufende Ringnut aufweist, der oder die eine entsprechende Erhebung, einen entsprechenden Bund oder einen vorspringenden Ringsteg, der am vorderen Abschnitt der Spannzange vorgesehen ist, aufnehmen. Es versteht sich, daß die Einstiche oder dergleichen natürlich auch an der Spannzange vorgesehen sein können, wobei dann an der Kontaktdüse die entsprechenden Erhebungen oder dergleichen angeordnet sind, so daß letztlich auch wieder Erhebungen oder korrespondierende Einstiche zur Halterung der Kontaktdüse am Brennerkopf miteinander in Eingriff stehen.

Von Vorteil weist die Spannzange eine im wesentlichen zentrische Bohrung auf, in der der Schaft der Kontaktdüse aufgenommen ist. Auch durch diese Maßnahme wird eine großflächige Verbindung zwischen Spannzange und Kontaktdüse gewährleistet.

Gemäß einer anderen vorteilhaften Weiterbildung der Erfindung weist die Spannzange in einem mittleren Abschnitt eine kegelige oder konische Außenkontur auf, die von einer korrespondierenden Innenkontur, beispielsweise eine Ausdrehung des Brennerkopfes aufgenommen ist. Diese korrespondierenden Konturen bilden einerseits eine großflächige Verbindung zwischen Spannzange und Brennerkopf und dienen andererseits dem Schließen und Öffnen der Spannzange.

Zum einfachen Lösen beziehungsweise Festlegen der Kontaktdüse am Brennerkopf weist die Spannzange am rückwärtigen freien Ende ein Außengewinde auf, welches mit einem Innengewinde des Brennerkopfes in Eingriff steht. Durch einfaches Ein- oder Ausdrehen der Spannzange werden aufgrund der korrespondierenden konischen Konturen von Spannzange und Brennerkopf die Backen der Spannzange an den Schaft der Kontaktdüse angepreßt beziehungsweise bei entgegengesetztem Drehsinn gelöst. Somit kann die Kontaktdüse äußerst einfach und schnell ausgewechselt werden.

Weiterhin weist die Kontaktdüse nach einer anderen vorteilhaften Weiterbildung der Erfindung zwischen dem Schaft und dem vorderen freien Ende eine Ringstufe auf, die sich am vorderen Abschnitt der Spannzange abstützt. Die Ringstufe bildet somit ein Widerlager, welches die Eintauchtiefe des Schaftes der Kontaktdüse in die Spannzange begrenzt. Bei völlig in die Spannzange eingeführtem Schaft der Kontaktdüse stehen die miteinander korrespondierenden Mittel in Eingriff beziehungsweise können durch Spannen der Spannzange miteinander in Eingriff gebracht werden.

Schließlich erweist es sich als äußerst vorteilhaft, daß zwischen der Kontaktdüse, insbesondere dem Schaft, und dem Brennerkopf, insbesondere der Spannzange eine großflächige, kraftschlüssige Verbindung besteht.

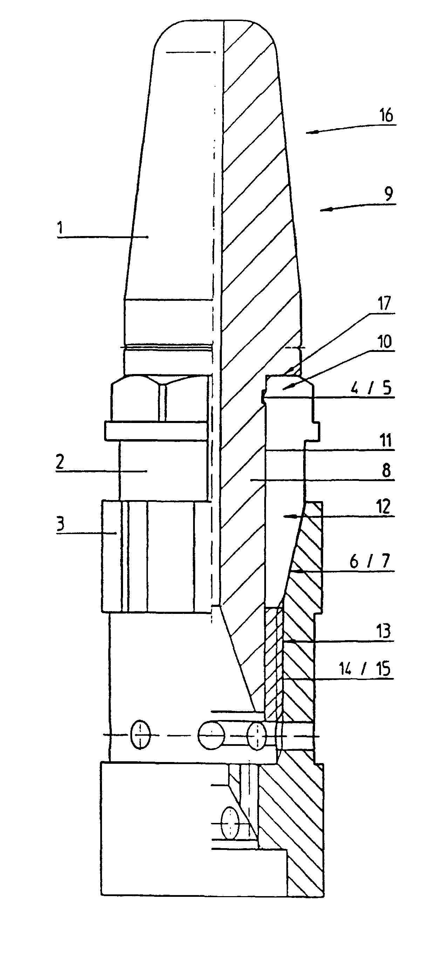

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Die einzige Figur zeigt eine Draufsicht auf ein Ausführungsbeispiel eines erfindungsgemäßen Brennerkopfes, teilweise geschnitten.

Der Brennerkopf 9 eines Lichtbogenschweiß- oder - schneidbrenners mit vorzugsweise abschmelzender Drahtelektrode besitzt eine Kontaktdüse 1, welche mittels einer Spannzange 2 lösbar am Brennerkopf 9 gehalten ist. Die Kontaktdüse 1 und Spannzange 2 weisen jeweils miteinander korrespondierende Mittel auf, die bei am Brennerkopf 9 gehalterter Kontaktdüse einen Formschluß zwischen Kontaktdüse 1 und Spannzange 2 bilden. Diese Mittel können ganz allgemein als Nut-/Federmittel beziehungsweise als Ringnut/-bund ausgebildet sein.

Die Kontaktdüse 1 besitzt einen im wesentlichen zylindrischen rückwärtigen Schaft 8, der über seinen Umfang einen oder gegebenenfalls auch mehrere ringförmig verteilte Einstiche 5 aufweist. Dieser Einstich 5 nimmt bei dem hier gewählten Ausführungsbeispiel einen am vorderen Abschnitt 10 der Spannzange 2 gebildeten Bund 4 auf, so daß nach Spannen der Spannzange 2 eine formschlüssige Halterung beziehungsweise Verbindung zwischen Kontaktdüse 1 und Spannzange 2 vorliegt.

Die Spannzange 2 besitzt eine im wesentlichen zentrische Bohrung 11, in der der Schaft 8 der Kontaktdüse 1 aufgenommen ist. In einem mittleren Abschnitt 12 besitzt die Spannzange 2 eine kegelige oder konische Außenkontur 7, die von einer korrespondierenden Innenkontur, beispielsweise einer Ausdrehung 6 der Aufnahme 3 des Brennerkopfes 9 aufgenommen ist. Am rückwärtigen freien Ende 13 der Spannzange 2 ist ein Außengewinde 14 vorgesehen, welches mit einem Innengewinde 15 der Aufnahme 3 des Brennerkopfes 9 in Eingriff steht.

Die Kontaktdüse besitzt zwischen dem Schaft 8 und dem freien Abschnitt 16 eine Ringstufe 17, die sich am vorderen Abschnitt 10 der Spannzange 2 abstutzt. Dabei ist die Anordnung der Ringstufe in Bezug auf den vorderen Abschnitt 10 der Spannzange 2 derart getroffen, daß bei einem Abstützen der Ringstufe 17 auf dem Abschnitt 10 der Spannzange 2 die miteinander korrespondierenden Formschlußmittel miteinander in Eingriff stehen.

Aufgrund der besonderen Ausbildung des Schaftes 8, der Spannzange 2 sowie der Aufnahme 3 des Brennerkopfes 9 ist für eine großflächige, kraftschlussige Verbindung zwischen der Kontaktdüse 1 und dem Brennerkopf 9 gesorgt.

Wird die Kontaktduse 1 in die Spannzange 2 eingesteckt, so rastet der am vorderen Ende der Spannzange 2 gebildete Bund 4 in den Einstich 5 der Kontaktduse 1 ein und bildet eine formschlüssige Verbindung beziehungsweise Halterung zwischen Kontaktdüse 1 und Spannzange 2.

Anschließend wird die Spannzange 2 in die Aufnahme 3 des Brennerkopfes 9 eingeschraubt. Vermittels der konischen Ausdrehung 6 in der Aufnahme 3 wird die Spannzange 2 mit entsprechend ausgebildeter konischer Außenkontur 7 zusammengedrückt, wobei sich der Schaft 8 der Kontaktdüse 1 in der Ausdrehung 6 großflächig anlegt. Durch diese Maßnahme wird eine großflächige kraftschlussige Verbindung zwischen Kontaktdüse 1 und Spannzange 2 realisiert. Zusätzlich ist diese Verbindung formschlüssig mittels der korrespondierenden Mittel verriegelt, so daß verhindert wird, daß die Kontaktdüse 1 beim Festbrennen oder wegen nicht ausreichenden Kraftschlusses, beispielsweise bedingt durch Fertigungs- und Handhabungsfehler, während des Betriebes des Schweißbrenners aus der Spannzange 2 ausgetrieben wird. Die Prozeßsicherheit ist durch diese Maßnahme wesentlich erhöht.

### Bezugszeichenliste

- 1 -: Kontaktdüse
- 2 -: Spannzange
- 3 -: Aufnahme
- 4 -: Bund
- 5 -: Einstich
- 6 -: Ausdrehung
- 7 -: Außenkontur
- 8 -: Schaft
- 9 -: Brennerkopf
- 10 -: vorderer Abschnitt
- 11 -: Bohrung
- 12 -: mittlerer Abschnitt
- 13 -: freies Ende
- 14 -: Außengewinde
- 15 -: Innengewinde
- 16 -: freier Abschnitt
- 17 -: Ringstufe

## Patentansprüche

1. Brennerkopf (9) eines Lichtbogenschweiß- oder - schneidbrenners mit vorzugsweise abschmelzender Elektrode, wie Drahtelektrode oder dergleichen, und mit einer Kontaktdüse (1), wobei der Brennerkopf (9) eine Spannzange (2) zur lösbaren Halterung der Kontaktdüse (1) am Brennerkopf (9) aufweist, **dadurch gekennzeichnet, dass** in einem mittleren Abschnitt (12) die Spannzange (2) eine kegelige oder konische Außenkontur (7) aufweist, die von einer korrespondierenden Innenkontur des Brennerkopfes (9) aufgenommen ist, und dass die Kontaktdüse (1) und die Spannzange (2) jeweils miteinander korrespondierende Mittel aufweisen, die bei am Brennerkopf (9) gehalterter Kontaktdüse (1) einen Formschluß zwischen Kontaktdüse (1) und Spannzange (2) bilden wodurch zwischen der kontaktdüse und dem Brennerkopf eine großflächige kraftschlüssige Verbindung entsteht.

2. Brennerkopf nach Anspruch 1, **dadurch gekennzeichnet, daß** die korrespondierenden Mittel als Nut-/Federmittel ausgebildet sind.

3. Brennerkopf nach Anspruch 1 oder 2, **dadurch gekennzeichnet, daß** die Mittel als Ringnut/-bund ausgebildet sind.

4. Brennerkopf nach einem der vorhergehenden Ansprüche, **dadurch gekennzeichnet, daß** die Kontaktdüse (1) einen im wesentlichen zylindrischen rückwärtigen Schaft (8) aufweist, der über seinen Umfang einen oder mehrere ringförmig verteilte Einstiche (5) oder eine umlaufende Ringnut aufweist, der oder die eine entsprechende Erhebung, einen entsprechenden Bund (4) oder einen vorspringenden Ringsteg oder dergleichen, welche bevorzugt an dem vorderen Abschnitt (10) der Spannzange (2) angeordnet sind, aufnehmen.

5. Brennerkopf nach einem der vorhergehenden Ansprüche, **dadurch gekennzeichnet, daß** die Spannzange (2) eine im wesentlichen zentrische Bohrung (11) aufweist, in der der Schaft (8) der Kontaktdüse (1) aufgenommen ist.

6. Brennerkopf nach einem der vorhergehenden Ansprüche, **dadurch gekennzeichnet, dass** die korrespondierende Innenkontur eine Ausdrehung (6) der Aufnahme (3) des Brennerkopfes (9) ist.

7. Brennerkopf nach einem der vorhergehenden Ansprüche, **dadurch gekennzeichnet, daß** die Spannzange (2) am rückwärtigen freien Ende (13) ein Außengewinde (14) aufweist, welches mit einem Innengewinde (15) der Aufnahme (3) des Brennerkopfes (9) in Eingriff steht.

8. Brennerkopf nach einem der vorhergehenden Ansprüche, **dadurch gekennzeichnet, daß** die Kontaktdüse (1) zwischen dem Schaft (8) und dem freien Abschnitt (16) eine Ringstufe (17) aufweist, die sich am vorderen Abschnitt (10) der Spannzange (2) abstützt.

9. Brennerkopf nach einem der vorhergehenden Ansprüche, **dadurch gekennzeichnet, daß** die großflächige, kraftschlüssige Verbindung zwischen dem Schaft (8), und der Spannzange (2) besteht.

## Claims

1. Torch head (9) of an arc welding or cutting torch with preferably fusible electrode, such as wire electrode or the like, and with a contact nozzle (1), wherein the torch head (9) comprises a split chuck (2) for detachable mounting of the contact nozzle (1) at the torch head (9), **characterised in that** in a middie section (12) the split collet (2) has a cone-shaped or conical outer contour (7), which is received by a corresponding inner contour of the torch head (9), and that the contact nozzle (1) and the split collet (2) have mutually corresponding means which when the contact nozzle (1) is mounted at the torch head (9) form a mechanically positive connection between contact nozzle (1) and split collet (2), whereby a large-area, force-locking connection arises between the contact nozzle and the burner head.

2. Torch head according to claim 1, **characterised in that** the corresponding means are formed as groove-and-key means.

3. Torch head according to claim 1 or 2, **characterised in that** the means are formed as an annular groove-and-collar.

4. Torch head according to one of the preceding claims, **characterised in that** the contact nozzle (1) has a substantially cylindrical rearward shank (8) which has one or more recesses (5) distributed annularly over its circumference or an encircling annular groove, which receive or receives a corresponding protrusion, a corresponding collar (4) or a protruding annular web or the like, which is preferably arranged at the forward section (10) of the split collet (2).

5. Torch head according to one of the preceding claims, **characterised in that** the split collet (2) has a substantially central bore (11) in which the shank (8) of the contact nozzle (1) is received.

6. Torch head according to one of the preceding claims, **characterised in that** the corresponding inner contour is a turned hollowing (6) of the mount (3) of the torch head (9).

7. Torch head according to one of the preceding claims, **characterised in that** the split collet (2) has at the rearward free end (13) an external thread (14) which is disposed in engagement with an internal thread (15) of the mount (3) of the torch head (9).

8. Torch head according to one of the preceding claims, **characterised in that** the contact nozzle (1) has between the shank (8) and the free section (6) an annular step (17) supported at the forward section (10) of the split collet (2).

9. Torch head according to one of the preceding claims, **characterised in that** the large-area, force-locking connection is present between the shank (8) and the split collet (2).

## Revendications

1. Tête de brûleur (9) d'un brûleur de soudure ou de coupe à arc possédant une électrode, de préférence fusible, telle qu'une électrode fil ou analogue, et une buse de contact (1), la tête de brûleur (9) présentant une pince de serrage (2) destinée à la fixation démontable de la buse de contact (1) sur la tête de brûleur (9), **caractérisée en ce que**, dans un segment central (12), la pince de serrage (2) présente un profil extérieur (7) à section décroissante ou conique qui est reçu par un profil intérieur correspondant de la tête de brûleur (9) et **en ce que** la buse de contact (1) et la pince de serrage (2) présentent respectivement des moyens qui se correspondant mutuellement et qui, lorsque la buse de contact (1) est montée sur la tête de brûleur, forment une liaison par complémentarité de forme entre la buse de contact (1) et la pince de serrage (2), de sorte qu'il s'établit une liaison à grande surface, opérant par action de force, entre la buse de contact et la tête de brûleur.

2. Tête de brûleur selon la revendication 1, **caractérisée en ce que** les moyens correspondants sont constitués par des moyens à rainure et languette.

3. Tête de brûleur selon la revendication 1, **caractérisée en ce que** les moyens sont constitués par une gorge et une embase annulaires.

4. Tête de brûleur selon une des revendications précédentes, **caractérisée en ce que** la buse de contact (1) comprend une tige arrière (8) sensiblement cylindrique qui présente lui-même une ou plusieurs entailles (5) réparties en anneaux sur sa circonférence, ou bien une gorge annulaire circonférentielle, qui reçoit ou reçoivent une protubérance correspondante, une embase correspondante (4) ou une nervure annulaire saillante ou analogue, lesquelles sont de préférence disposées sur le segment avant (10) de la pince de serrage (2) .

5. Tête de brûleur selon une des revendications précédentes, **caractérisée en ce que** la pince de serrage (2) présente un perçage sensiblement central (11) dans lequel est logé la tige (8) de la buse de contact (1).

6. Tête de brûleur selon une des revendications précédentes, **caractérisée en ce que** le profil intérieur correspondant est un évidement tourné (6) du logement (3) de la tête de brûleur (9).

7. Tête de brûleur selon une des revendications précédentes, **caractérisée en ce que** la pince de serrage (2) présente, à l'extrémité libre arrière (13), un filetage extérieur (14) qui est en prise avec un filetage intérieur (15) du logement (3) de la tête de brûleur (9).

8. Tête de brûleur selon une des revendications précédentes, **caractérisée en ce que** la buse de contact (1) présente, entre la tige (8) et le segment libre (16), un épaulement annulaire (17) qui s'appuie sur le segment avant (10) de la pince de serrage (2).

9. Tête de brûleur selon une des revendications précédentes, **caractérisée en ce que** la liaison opérant par action de force avec une grande surface est formée entre la tige (8) et la pince de serrage (2).
